# EUROPÄISCHE PATENTSCHRIFT

(11) **EP 4 565 978 B1**
(45) Veröffentlichungstag und Bekanntmachung des Hinweises auf die Patenterteilung: **18.03.2026**
(21) Anmeldenummer: 23787031.6
(22) Anmeldetag: 29.09.2023
(51) Int. Cl.: G06F 21/36, G02B 27/01, H04W 12/33

(54) **AUSGEBEN EINER AR-ANZEIGE EINER SICHERHEITSINFORMATION**
OUTPUTTING AN AR DISPLAY OF SECURITY INFORMATION
ÉMISSION D'UN AFFICHAGE AR D'UNE INFORMATION DE SÉCURITÉ

(30) Priorität: 05.10.2022 EP 22199765
(43) Veröffentlichungstag der Anmeldung: 11.06.2025
(73) Patentinhaber: Siemens Aktiengesellschaft, 80333 München (DE)
(72) Erfinder: FALK, Rainer, 85435 Erding (DE)
(74) Vertreter: Siemens Patent Attorneys
(86) Internationale Anmeldenummer: PCT/EP2023/077035
(87) Internationale Veröffentlichungsnummer: WO 2024/074419

(56) Entgegenhaltungen:
- WO-A1-2015/085434
- US-A1- 2019 377 862
- US-B1- 8 430 310
- US-B1- 9 679 152

## Beschreibung

### HINTERGRUND DER ERFINDUNG

### Gebiet der Erfindung

Die vorliegende Erfindung betrifft ein Verfahren zum Ausgeben einer Anzeige einer Sicherheitsinformation. Außerdem betrifft die Erfindung ein zugehöriges Augmented Reality Gerät und ein korrespondierendes Verfahren zum Senden einer Sicherheitsinformation mit einem zugehörigen AR-Hintergrundsystem.

### Beschreibung des Stands der Technik

In industriellen Automatisierungssystemen, insbesondere in Produktionsumgebungen, werden Steuergeräte verwendet. Auch wenn ein Remote-Zugriff über eine Datenkommunikationsverbindung in vielen Fällen möglich ist, spielt auch ein direkter lokaler Zugriff auf die lokale Nutzerschnittstelle eine wichtige Rolle. Um einen Zugriff auf kritische Funktionen freizuschalten, muss ein Gerätecode, insbesondere eine PIN oder ein Passwort, eingegeben werden. Dies erfolgt insbesondere entsprechend der jeweiligen Schutzstufe und/oder insbesondere zum Freigeben der Konfigurationsfunktionen.

Im Stand der Technik sind Passwort-Speicher bekannt, insbesondere für PCs oder Mobilgeräte. Diese ermöglichen einem Nutzer, nach Eingabe eines Master-Passworts auf die hinterlegten Passwörter zuzugreifen. Der Nutzer kann ein Passwort insbesondere abtippen oder per "Copy&Paste" in ein Eingabefeld übernehmen.

Es ist außerdem bekannt, dass Web-Browser die Passwörter, ähnlich wie ein Passwort-Speicher, speichern, und die Felder in einer Web-Oberfläche damit automatisch befüllen.

Bei einem Remote-Zugriff auf ein Gerät ist bekannt, dass sich das zugreifende Gerät oder der zugreifende Nutzer kryptographisch oder durch ein Passwort authentisiert.

Außerdem ist eine Nutzung von Augmented Reality (AR) in der Produktion bekannt. Damit können Service-Technikern insbesondere Handbücher angezeigt werden. Auch sind ARbasierte Lösungen für die Industrie bekannt, bei denen Objekte, die der AR-Nutzer, z.B. ein Service-Techniker, aktuell sieht, automatisch erkannt werden oder dass dem lokalen AR-Nutzer durch die AR-Brille Zusatzinformationen in das Blickfeld eingefügt werden. Die Dokumente US9679152B1 sowie US2019/377862A1 sind relevant.

Die Aufgabe der Erfindung besteht darin, eine verbesserte Lösung für einen lokalen Zugriff auf eine durch einen Code geschützte Vorrichtung bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren zum Ausgeben einer Anzeige einer Sicherheitsinformation, wobei die Sicherheitsinformation zum Freischalten einer Sperre ausgebildet ist, wobei die Sperre als Zugriffsschutz auf eine zu schützende Vorrichtung ausgebildet ist,
mit den Schritten:
- Ein visuelles Aufnehmen einer Vorrichtungsidentifizierung der zu schützenden Vorrichtung, wodurch eine Vorrichtungsidentifizierungsinformation erstellt wird,
- Ein Senden der Vorrichtungsidentifizierungsinformation,
- Ein Empfangen der Sicherheitsinformation, wobei die Sicherheitsinformation der Vorrichtungsidentifizierungsinformation zugeordnet ist, und
- Ein Ausgeben einer visuellen Anzeige, wobei die visuelle Anzeige zumindest einen Ausschnitt einer Abbildung der zu schützenden Vorrichtung und die Anzeige der Sicherheitsinformation umfasst, und
- ein Ausgeben einer visuellen Unterstützung für eine Verwendung der Sicherheitsinformation für den Zugriff auf die Vorrichtung.

Die zu schützenden Vorrichtung ist insbesondere als eine Vorrichtung eines industriellen Automatisierungssystems, insbesondere in einer Produktionsumgebungen, insbesondere als ein Gerät, insbesondere als ein Steuergerät ausgebildet. Die Sperre schützt insbesondere einen Zugriff auf eine lokale Geräteschnittstelle des Geräts. Ein Lösen der Sperre ermöglicht einen Zugriff auf die lokale Geräteschnittstelle des Geräts. Die lokale Geräteschnittstelle ist insbesondere als eine lokale Nutzerschnittstelle ausgebildet, es handelt sich somit nicht um einen Remote-Zugriff über eine Datenkommunikationsverbindung.

Alternativ oder zusätzlich ist die Vorrichtung als ein Schaltschrank oder ein elektronisches Schloss einer Türe zu einem Geräteraum ausgebildet. Die Sperre ist insbesondere ausbildet als ein elektronisches Schloss. In dieser Ausführungsform ist der Zugriffsschutz insbesondere als Zugangsschutz ausgebildet.

Zusammengefasst ist der Zugriffsschutz insbesondere als:
- ein elektronisches Schloss eines Schaltschranks und/oder
- ein elektronisches Schloss einer Türe zu einem Geräteraum, in welchem sich das Gerät befindet und/oder
- eine Verwaltungsfunktion des Geräts, insbesondere eine Schutzstufe des Geräts und/oder ein Konfigurations-Menü des Geräts und/oder
ausgebildet.

Die Sicherheitsinformation ermöglicht einen Zugriff auf die Vorrichtung. Somit ist der Zugriff auf die Vorrichtung durch einen Zugriffsschutz, insbesondere einen Zugangsschutz, geschützt, insbesondere gesperrt. Die Sicherheitsinformation ermöglicht ein Lösen des Zugriffsschutzes, insbesondere des Zugangsschutzes und damit den Zugriff auf die die Vorrichtung, insbesondere auf eine lokale Geräteschnittstelle des Geräts.

Das Aufnehmen der Vorrichtungsidentifizierung der Vorrichtung ist insbesondere als eine visuelle Aufnahme ausgebildet. Das Aufnehmen erfolgt insbesondere über eine Kamera. Ein Nutzer befindet sich in einer Position, in welcher seine Kamera die Vorrichtung und insbesondere die Vorrichtungsidentifizierung im Sichtfeld hat. Durch die erfindungsgemäße Methode wird eine Aufnahme der Vorrichtungsidentifizierung vorgenommen. Dies kann insbesondere durch eine Nutzerhandlung eingeleitet werden oder automatisch, sobald eine Vorrichtungsidentifizierung von der Kamera erkannt wird. In jedem Fall muss sich der Nutzer in der Nähe der Vorrichtung befinden. Die Vorrichtungsidentifizierung muss von der Position des Nutzers sichtbar sein, so kann das Aufnehmen erfolgen.

Die Vorrichtungsidentifizierungsinformation ermöglicht eine eindeutige Erkennung der Vorrichtung. Die Vorrichtungsidentifizierung ist insbesondere als ein eindeutiges Vorrichtungserscheinungsbilde, ein Vorrichtungslabel, ein Gerätelabel, ein Kennzeichen oder eine Geräte-ID ausgebildet. Die Vorrichtungsidentifizierung ist insbesondere eine visuelle Vorrichtungsidentifizierung. Die Vorrichtungsidentifizierungsinformation ist eine Datei oder Inhalt von Daten, in Form welcher, die Vorrichtungsidentifizierung aufgenommen wurde. Die Vorrichtungsidentifizierungsinformation ist insbesondere eine Fotographie oder eine durch Bildverarbeitung erhaltene Information aus einer Fotographie der Vorrichtungsidentifizierung.

Die Vorrichtungsidentifizierung wird insbesondere über eine Kamera aufgenommen.

Das Empfangen der Sicherheitsinformation erfolgt durch eine Empfangseinheit und wird von einem Password-Storage, auch als Passwortspeichereinheit oder Security-Code-Datenbank bezeichenbar, gesendet. Die Sicherheitsinformation wird somit von dem Password-Storage abgerufen. Die in der Security-Code-Datenbank hinterlegten Security-Codes sind insbesondere verschlüsselt abgelegt.

In einer Ausführungsform wird die reine Sicherheitsinformation empfangen und daraus von der AR-Device (ein AR-fähiges Gerät) die Anzeige der Sicherheitsinformation erstellt. In einer alternativen Ausführungsform wird bereits die Anzeige der Sicherheitsinformation empfangen und die Sicherheitsinformation somit über diese bereits in aufgearbeiteter Form empfangen.

Es erfolgt ein Ausgeben einer visuellen Anzeige, wobei die visuelle Anzeige zumindest einen Ausschnitt einer Abbildung der Vorrichtung und eine Anzeige der Sicherheitsinformation umfasst. Die Abbildung der Vorrichtung umfasst insbesondere eine Live-Videowiedergabe eines Sichtfeldes auf die Vorrichtung. Die Sicherheitsinformation wird zusätzlich zu dem Ausschnitt der Abbildung der Vorrichtung oder einer Abbildung der Vorrichtung im Gesamten mit der visuellen Anzeige ausgegeben. Die Sicherheitsinformation wird somit relativ zu der Abbildung der Vorrichtung angeordnet, insbesondere neben der Vorrichtung und in Überlagerung mit der Vorrichtung, in das Sichtfeld des Nutzers eingeblendet.

Das erfindungsgemäße Verfahren bietet insbesondere den Vorteil, dass ein Nutzer, insbesondere ein Service-Techniker und/oder eine Augmented Reality (AR) Nutzer, der die entsprechende Sicherheitsinformation nicht auswendig kennt, die entsprechende Sicherheitsinformation, insbesondere Security-Codes, nicht manuell auf einem Zettel mitführen muss oder andere Service-Techniker z.B. telefonisch nach der entsprechenden Sicherheitsinformation fragen muss.

Dadurch wird nicht nur das Sicherheitsniveau verbessert, sondern es wird weniger Zeit benötigt, um die erforderliche Sperre und den Zugriffschutz freizuschalten. Außerdem können erfolgte Zugriffe protokolliert und damit nachvollzogen werden.

Die Erfindung nutzt Möglichkeiten, speziell jene, welche sich durch ein industrielles 5G-System Augmented Reality in einer Produktionsumgebung ergeben, um die Eingabe von einer herkömmlichen Sicherheitsinformation, insbesondere Gerätecodes und/oder PINs, zu vereinfachen.

Die visuelle Unterstützung wird dabei insbesondere zusätzlich zu der Sicherheitsinformation ausgegeben. Somit unterscheidet sich die visuelle Unterstützung von der Sicherheitsinformation an sich. Dass die visuelle Unterstützung "für eine Verwendung der Sicherheitsinformation" geeignet ist, umfasst außerdem, dass die visuelle Unterstützung dem AR-Nutzer eine Verwendung der Sicherheitsinformation zum Freischalten der Sperre erleichtert, d.h. den AR-Nutzer dabei unterstützt. Somit erfolgt insbesondere ein zusätzliches Ausgeben der visuellen Unterstützung für eine Verwendung der Sicherheitsinformation für das Freischalten der Sperre.

Das Ausgeben der visuellen Unterstützung erfolgt somit zusätzlich zu dem Ausgeben der visuellen Anzeige, welche den Ausschnitt der Abbildung der zu schützenden Vorrichtung und die Anzeige der Sicherheitsinformation umfasst.

Die visuelle Unterstützung unterstützt einen Nutzer bei einer korrekten Eingabe der Sicherheitsinformation. Die visuelle Unterstützung unterstützt einen Nutzer somit bei einem Freischalten der Sperre durch eine korrekte Verwendung der Sicherheitsinformation. Die visuelle Unterstützung ist insbesondere als eine Augmented Reality Ausgabe ausgebildet und wird über ein AR-fähiges Gerät ausgegeben.

In einer Weiterbildung der Erfindung ist die Sicherheitsinformation ausgebildet als:
- Ein Gerätecode und/oder
- ein PIN-Code und/oder
- ein Freischaltcode und/oder
- ein Passwort und/oder
- ein numerischer Code und/oder
- ein alphanumerischer Code.

Die Sicherheitsinformation ermöglicht wie zuvor beschrieben einen Zugriff auf die Vorrichtung durch ein Lösen des Zugriffsschutzes. Die Sicherheitsinformation ist insbesondere als eine Reihe von Zeichen ausgebildet, welche von einem Nutzer abgefragt wird.

In einer weiteren Weiterbildung der Erfindung ist die visuelle Anzeige als Augmented Reality Anzeige ausgebildet. Erfindungsgemäß umfasst die visuelle Anzeige zumindest einen Ausschnitt einer Abbildung der zu schützenden Vorrichtung und die Anzeige der Sicherheitsinformation.

Die Abbildung der Vorrichtung umfasst wie zuvor beschrieben insbesondere eine Live-Videowiedergabe eines Sichtfeldes auf die Vorrichtung. Die Sicherheitsinformation wird zusätzlich zu dem Ausschnitt der Abbildung der Vorrichtung oder einer Abbildung der Vorrichtung im Gesamten mit der visuellen Anzeige ausgegeben. Die Sicherheitsinformation wird somit relativ zu der Abbildung der Vorrichtung angeordnet, insbesondere neben der Vorrichtung und in Überlagerung mit der Vorrichtung, in das Sichtfeld des Nutzers eingeblendet.

Für die technische Umsetzung des Ausgebens der visuellen Anzeige werden insbesondere bekannte Augmented Reality Verfahren herangezogen. Das AR-System blendet die Sicherheitsinformation, insbesondere den entsprechenden Code, in das Sichtfeld des AR-Nutzers ein.

In einer weiteren Weiterbildung der Erfindung ist die visuelle Unterstützung ausgebildet als:
- eine Augmentation eines Bereichs eines Bedienfeldes für eine Eingabe der Sicherheitsinformation und/oder
- eine Augmentation einer Taste eines Nummernblocks für eine Eingabe der Sicherheitsinformation und/oder
- eine Warnanzeige.

Eine Augmentation kann im Sinne der Erfindung auch als eine visuelle Hervorhebung, insbesondere durch Augmented Reality Technik, bezeichnet werden.

In dieser Weiterbildung wird auch das entsprechende Bedienfeld, insbesondere nachdem es vom AR-System erkannt wurde, hervorgehoben, insbesondere werden entsprechende Taste eines Nummernblocks hervorgehoben.

In einer weiteren Weiterbildung der Erfindung weist das erfindungsgemäße Verfahren den weiteren Schritt auf:
- ein Aufnehmen einer Benutzerhandlung an oder relativ angeordnet zu der Vorrichtung.

So ist es möglich, eine von einem Nutzer erfolgte Benutzerhandlung, insbesondere eine Eingabe der Sicherheitsinformation zu erkennen, insbesondere indem der Tastendruck durch Bildauswertung erkannt wird.

Weiterhin kann überwacht werden, ob der AR-Nutzer tatsächlich die richtige Eingabe am Bedienfeld vorgenommen hat.

In einer weiteren Weiterbildung der Erfindung erfolgt die Ausgabe der visuellen Unterstützung in Reaktion auf eine Auswertung der Benutzerhandlung.

Nach dieser Ausführungsform wird insbesondere ein Zeichen als visuelle Unterstützung in Reaktion auf die Auswertung einer zuvor getätigten Benutzereigabe ausgegeben. Die Ausgabe erfolgt insbesondere über ein Display und/oder ein AR-System, über welches auch das erfindungsgemäße Ausgeben der visuellen Anzeige erfolgt. Das Zeichen ist insbesondere als ein Sternchen '*', welches die zuvor getätigte Benutzereigabe repräsentiert, ausgebildet.

Auch kann das jeweils nächste einzugebende Zeichen bzw. die als nächstes einzugebende Ziffer durch die visuelle Unterstützung in Form einer visuell eingeblendeten Zeichenfolge bzw. Ziffernfolge hervorgehoben werden, oder es kann nur das nächste einzugebende Zeichen bzw. Ziffer angezeigt werden.

Weiterhin kann der Nutzer, wenn überwacht wird, ob der AR-Nutzer tatsächlich die richtige Eingabe am Bedienfeld vorgenommen hat, bei einer Falscheingabe durch die visuelle Unterstützung darauf hingewiesen werden, dass eine Falscheigabe erfolgt ist. Das erfolgt insbesondere durch eine Warnanzeige indem insbesondere die Falscheingabe rot markiert dargestellt wird.

In einer weiteren Weiterbildung der Erfindung weist das erfindungsgemäße Verfahren den weiteren Schritt auf:
- ein Senden einer Validierungsinformation vor dem Empfangen der Sicherheitsinformation.

Das Senden der Validierungsinformation erfolgt insbesondere nach dem visuellen Aufnehmen der Vorrichtungsidentifizierungsinformation.

Die Validierungsinformation bestätigt, dass der Sender der Vorrichtungsidentifizierungsinformation berechtigt ist die Sicherheitsinformation zu empfangen. Die Validierungsinformation wird von dem Sender der Sicherheitsinformation vor dem Senden dieser geprüft.

In einer weiteren Weiterbildung der Erfindung ist die Validierungsinformation ausgebildet als:
- eine Vorrichtungsauthentisierungsinformation und/oder
- eine Positionsinformation und/oder
- eine Nutzerauthentisierungsinformation und/oder
- eine Anwendungsinformation eines Benutzergeräts.

Durch die Vorrichtungsauthentisierungsinformation ist die Vorrichtung, von welchem die Vorrichtungsidentifizierung stammt, authentisierbar. Die Vorrichtungsauthentisierungsinformation ist insbesondere als eine Geräteauthentisierungsinformation ausgebildet. Es erfolgt insbesondere eine Erkennung der der Vorrichtungsauthentisierungsinformation zugeordneten Vorrichtung oder des zugeordneten Eingabefelds. Dies erfolgt insbesondere durch eine Objekterkennung oder anhand eines an der Vorrichtung angebrachten Barcodes, insbesondere ein 2D-Barcode oder ein QR-Code. Dadurch kann überprüft werden, ob sich der AR-Nutzer tatsächlich gerade vor der entsprechenden Vorrichtung befindet und ob das Eingabefeld aktuell nutzbar ist, insbesondere nicht durch eine Abdeckklappe abgedeckt bzw. ob aktuell tatsächlich die Eingabe eines Security-Codes durch die Vorrichtung entsprechend einer Vorrichtungsanzeige erwartet wird.

Die Positionsinformation ermöglicht eine Erkennung, dass sich der Nutzer bzw. die von ihm verwendete AR-Brille oder AR-Device sich in der Nähe der Vorrichtung oder Eingabefelds befindet. Dies kann auch durch Bildauswertung erfolgen. Zusätzlich kann aber auch eine Positionsinformation durch ein Lokalisierungssystem, insbesondere RFID, NFC, WLAN, UWB, 5G Mobilfunk, erfasst und überprüft werden.

Durch die Nutzerauthentisierungsinformation ist der Träger einer AR-Brille, einer Ausführungsform eines AR-Geräts, identifizierbar und/oder authentisierbar. Dies erfolgt insbesondere durch eine biometrische Authentisierung, insbesondere durch eine Kamera, die bei einer AR-Brille das Irismuster und/oder den Augenhintergrund erkennt oder durch einen akustischen Fingerprint (Ultraschall) des Trägers oder des Kopfes, wodurch ein akustischer Fingerabdruck des Schädelknochens erfasst und überprüft wird.

Durch die Anwendungsinformation des Benutzergeräts wird eine Information über eine Anwendung, insbesondere eine korrekte oder inkorrekte Anwendung des Benutzergeräts bereitgestellt. Das Benutzergerät, auch als User-Device bezeichenbar, ist insbesondere ein mobiles Gerät, insbesondere ein Smart-Device oder Tablet mit einer AR-Anwendung, oder eine AR-Brille. Durch die Anwendungsinformation ist eine Überprüfung, ob die AR-Brille ordnungsgemäß aufgesetzt ist, möglich. Dazu kann insbesondere die Lage der AR-Brille durch Lagesensoren oder Berührungssensoren erfasst werden, insbesondere am Nasensteg und/oder Bügel der AR-Brille. Weiterhin kann überprüft werden, dass tatsächlich ein Auge im erwarteten Abstand bzw. an der erwarteten Position zu der AR-Brille befindet.

Die in der Security-Code-Datenbank hinterlegte Sicherheitsinformation ist insbesondere verschlüsselt abgelegt. Der kryptographische Schlüssel zum Entschlüsseln der verschlüsselten Sicherheitsinformation kann in einer Variante nur dann freigegeben werden, wenn die Validierungsinformation geprüft wurde und insbesondere die Nutzung der Sicherheitsinformation durch einen AR-Nutzer aktuell zulässig ist.

Die Erfindung umfasst außerdem ein Augmented Reality Gerät ausgebildet, ein Verfahren nach einem der vorherigen Ansprüche auszuführen. Das Gerät ist ein Nutzergerät, welches ausgebildet ist, dem Nutzer eine Augmented Reality Anzeige auszugeben. Die Augmented Reality Anzeige erweitert eine Anzeige der Realität, welche sich im Sichtfeld des Nutzers befindet, um eine Erweiterung, die Augmentation. Der Ausschnitt der Abbildung der zu schützenden Vorrichtung im Sinne der Erfindung entspricht der Realität. Die Anzeige der Sicherheitsinformation im Sinne der Erfindung wird durch die Augmentation angezeigt.

In einer Weiterbildung der Erfindung ist das Augmented Reality Gerät ausgebildet als:
- AR-Brille und/oder
- tragbares Mobilgerät, insbesondere ein Smartphone, eine Smartwatch oder ein Tablet.

Das Mobilgerät verfügt insbesondere über eine AR-App und außerdem insbesondere eine Authentisierungsfunktion des Nutzers über eine Fingerabdruck-Erkennung.

Die Erfindung umfasst außerdem ein Verfahren zum Senden einer Sicherheitsinformation, wobei die Sicherheitsinformation zum Freischalten einer Sperre ausgebildet ist, wobei die Sperre als Zugriffsschutz auf eine zu schützende Vorrichtung ausgebildet ist,
mit den Schritten:
- Ein Empfangen einer Vorrichtungsidentifizierungsinformation, wobei die Vorrichtungsidentifizierungsinformation als eine visuelle Aufnahme einer Vorrichtungsidentifizierung der zu schützende Vorrichtung ausgebildet ist,
- Ein Prüfen der Vorrichtungsidentifizierungsinformation,
- Ein Senden der Sicherheitsinformation in Abhängigkeit eines Ergebnisses des Prüfens der Vorrichtungsidentifizierungsinformation, wobei die Sicherheitsinformation der Vorrichtungsidentifizierungsinformation zugeordnet ist, und
- Ein Senden eines weiteren Datensatzes umfassend eine zusätzliche visuelle Unterstützung für eine Verwendung der Sicherheitsinformation für den Zugriff auf die zu schützende Vorrichtung, wobei die visuelle Unterstützung ausgebildet ist, zusätzlich zu der Sicherheitsinformation ausgegeben zu werden.

Das Verfahren zum Senden einer Sicherheitsinformation beschreibt die Erfindung aus Sicht eine AR-Hintergrundsystems. Das zuvor beschriebene Verfahren zum Ausgeben einer Anzeige einer Sicherheitsinformation beschreibt die Erfindung aus sich des korrespondierenden Nutzergeräts.

In einer Weiterbildung der Erfindung weist das Verfahren zum Senden einer Sicherheitsinformation mindestens einen der weiteren Schritte auf:
- Ein Senden eines Datensatzes umfassend eine visuelle Anzeige, wobei die visuelle Anzeige zumindest einen Ausschnitt einer Abbildung der zu schützenden Vorrichtung und die Anzeige der Sicherheitsinformation umfasst und/oder
- Ein Auswerten einer Benutzerhandlung an oder relativ angeordnet zu der Vorrichtung und/oder
- Ein Empfangen einer Validierungsinformation vor dem Senden der Sicherheitsinformation und/oder
- Ein Prüfen der Validierungsinformation, wobei das Senden der Sicherheitsinformation außerdem in Abhängigkeit eines Ergebnisses des Prüfens der Validierungsinformation erfolgt.

Die weiteren Schritte des Verfahrens zum Senden einer Sicherheitsinformation korrespondieren zu den weiteren Schritten der Ausführungsformen des Verfahrens zum Ausgeben einer Anzeige einer Sicherheitsinformation und die Beschreibungsdetails gelten entsprechend.

Die Erfindung umfasst außerdem ein AR-Hintergrundsystem ausgebildet ein erfindungsgemäßes Verfahren zum Senden einer Sicherheitsinformation auszuführen.

Die Datenübertragung zwischen dem AR-Gerät, insbesondere der AR-Brille, und dem AR-Hintergrundsystem erfolgt insbesondere über ein 5G-Mobilfunksystem. Es wird jedoch insbesondere auch eine WLAN-Kommunikation verwendet. Die Datenübertragung zwischen dem AR-Gerät und dem AR-Hintergrundsystem erfolgt insbesondere kryptographisch geschützt, insbesondere verschlüsselt, integritätsgeschützt und/oder authentisiert.

Die Erfindung umfasst außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte der erfindungsgemäßen Verfahren ausgeführt werden, wenn das Computerprogramm auf der Recheneinheit ausgeführt wird.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: ein Ablaufdiagramm des erfindungsgemäßen Verfahrens und
- Fig. 2: eine schematische Darstellung einer zu schützenden Vorrichtung und eines Augmented Reality Geräts.

### DETAILLIERTE BESCHREIBUNG DER ERFINDUNG

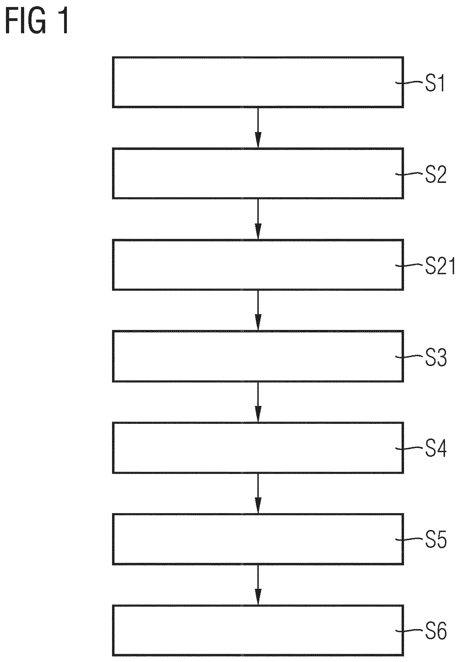

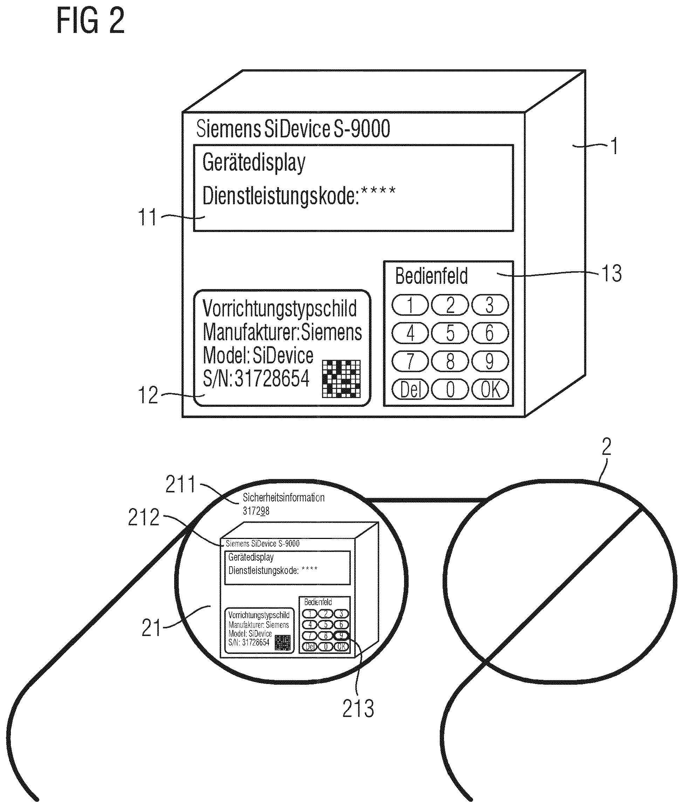

Fig. 1 zeigt ein Ablaufdiagramm des erfindungsgemäßen Verfahrens zum Ausgeben einer Anzeige einer Sicherheitsinformation 211 (dargestellt in Fig. 2), wobei die Sicherheitsinformation 211 zum Freischalten einer Sperre ausgebildet ist, wobei die Sperre als Zugriffsschutz auf eine zu schützende Vorrichtung 1 (dargestellt in Fig. 2) ausgebildet ist,
mit den Schritten:
- Schritt S1: Ein visuelles Aufnehmen einer Vorrichtungsidentifizierung 12 (dargestellt in Fig. 2) der zu schützenden Vorrichtung 1 (dargestellt in Fig. 2), wodurch eine Vorrichtungsidentifizierungsinformation erstellt wird,
- Schritt S2: Ein Senden der Vorrichtungsidentifizierungsinformation,
- Schritt S21: ein Senden einer Validierungsinformation vor dem Empfangen der Sicherheitsinformation S3,
- Schritt S3: Ein Empfangen der Sicherheitsinformation 211, wobei die Sicherheitsinformation 211 der Vorrichtungsidentifizierungsinformation 12 zugeordnet ist,
- Schritt S4: Ein Ausgeben einer visuellen Anzeige 21 (dargestellt in Fig. 2), wobei die visuelle Anzeige 21 zumindest einen Ausschnitt einer Abbildung 212 (dargestellt in Fig. 2) der zu schützenden Vorrichtung 1 und die Anzeige der Sicherheitsinformation 211 umfasst,
- Schritt S5: ein Ausgeben einer visuellen Unterstützung 213 (dargestellt in Fig. 2) für eine Verwendung der Sicherheitsinformation 211 für einen Zugriff auf die zu schützende Vorrichtung (1), und
- Schritt S6: ein Aufnehmen einer Benutzerhandlung an oder relativ angeordnet zu der zu schützenden Vorrichtung 1.

Die Fig. 2 veranschaulicht die Ausführung der Erfindung.

Die Sicherheitsinformation 211 ist in Fig. 2 als ein Gerätecode, ein PIN-Code, ein Freischaltcode und/oder ein numerischer Code bezeichenbar.

Die visuelle Anzeige 21 ist als Augmented Reality Anzeige 21 eines Augmented Reality Geräts 2 ausgebildet.

Die visuelle Unterstützung (213) ist in Fig. 2 als:
- eine Augmentation eines Bereichs eines Bedienfeldes (13) für eine Eingabe der Sicherheitsinformation (211) und
- eine Augmentation einer Taste eines Nummernblocks für eine Eingabe der Sicherheitsinformation (211)
ausgebildet.

Die Ausgabe der visuellen Unterstützung 213 erfolgt in Reaktion auf eine Auswertung der Benutzerhandlung.

Bei einem Industriegerät 1 muss ein Code durch einen Nutzer an einem Tastenfeld 13 eingegeben werden, insbesondere um die Service-Funktionalität freizuschalten. Dem Service-Techniker als AR-Nutzer wird dazu in seiner AR-Brille 2 der Zugangscode 211 (hier: 317298 für das linke Auge) eingeblendet.

Die Sicherheitsinformation 211 ist in Fig. 2 als ein Gerätecode, ein PIN-Code, ein Freischaltcode und/oder ein numerischer Code bezeichenbar.

Die visuelle Unterstützung 213 ist in Fig. 2 als:
- eine Augmentation eines Bereichs eines Bedienfeldes 13 für eine Eingabe der Sicherheitsinformation 211 und
- eine Augmentation einer Taste eines Nummernblocks 13 für eine Eingabe der Sicherheitsinformation 211
ausgebildet.

Als visuelle Unterstützung 213 wird hier die Taste, die der nächsten einzugebenden Ziffer entspricht, in der AR-Brille 2 visuell gekennzeichnet (hier die Taste "9"). Dazu kann durch die Kamera der AR-Brille 2 erfasst werden, dass bereits vier Ziffern eingegeben wurden (insbesondere anhand der Anzeige der vier Sternchen '****' im Geräte-Display 11). Weiterhin kann die Vorrichtung 1 erkannt werden, insbesondere durch Erfassen des Vorrichtungserscheinungsbildes oder des Vorrichtungs-Typschilds 12.

Die Realisierung der Erfindung kann in der AR-Brille 2 oder einem anderen AR-Gerät vollständig erfolgen. Vorzugsweise ist die AR-Brille 2 bzw. das andere AR-Gerät mit einem AR-Hintergrundsystem verbunden, insbesondere über WLAN oder ein 5G-Mobilfunknetz. Dies ermöglicht, dass die Bilderfassung und Bildauswertung, insbesondere durch eine Objekterkennung, im Hintergrundsystem erfolgt, insbesondere einem Backend- oder Edge-Computing-System oder in einer 5G Multi Access Edge Computing Infrastruktur eines Mobilfunksystems. Ebenso kann dort die durch die AR-Brille 2 einzublendende Zusatzinformation, insbesondere eine Information für eine Gerätewartung, ermittelt und an die AR-Brille 2 übermittelt werden, insbesondere durch Auswerten des von der AR-Brille 2 erfassten Bildes und durch Abfrage des Codes, der dem im Blickfeld liegenden Gerät zugeordnet in der Security-Code-Datenbank hinterlegt ist.

Die Datenübertragung zwischen der AR-Brille 2 und dem AR-Hintergrundsystem kann insbesondere über ein 5G-Mobilfunksystem erfolgen. Es kann jedoch insbesondere auch eine WLAN-Kommunikation verwendet werden. Die Datenübertragung erfolgt insbesondere kryptographisch geschützt, insbesondere verschlüsselt, integritätsgeschützt und/oder authentisiert.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Verfahren zum Ausgeben einer Anzeige einer Sicherheitsinformation (211), wobei die Sicherheitsinformation (211) zum Freischalten einer Sperre ausgebildet ist, wobei die Sperre als Zugriffsschutz auf eine zu schützende Vorrichtung (1) ausgebildet ist,
mit den Schritten:
- Ein visuelles Aufnehmen (S1) einer Vorrichtungsidentifizierung (12) der zu schützenden Vorrichtung (1), wodurch eine Vorrichtungsidentifizierungsinformation erstellt wird,
- Ein Senden (S2) der Vorrichtungsidentifizierungsinformation,
- Ein Empfangen (S3) der Sicherheitsinformation (211), wobei die Sicherheitsinformation (211) der Vorrichtungsidentifizierungsinformation (12) zugeordnet ist,
- Ein Ausgeben (S4) einer visuellen Anzeige (21), wobei die visuelle Anzeige (21) zumindest einen Ausschnitt einer Abbildung (212) der zu schützenden Vorrichtung (1) und die Anzeige der Sicherheitsinformation (211) umfasst, und
- ein zusätzliches Ausgeben (S5) einer visuellen Unterstützung (213) für eine Verwendung der Sicherheitsinformation (211) für das Freischalten der Sperre.

2. Verfahren nach Anspruch 1,
wobei die Sicherheitsinformation (211) als:
- Ein Gerätecode und/oder
- ein PIN-Code und/oder
- ein Freischaltcode und/oder
- ein Passwort und/oder
- ein numerischer Code und/oder
- ein alphanumerischer Code
ausgebildet ist.

3. Verfahren nach einem der vorhergehenden Ansprüche,
wobei die visuelle Anzeige (21) als Augmented Reality Anzeige ausgebildet ist.

4. Verfahren nach einem der vorhergehenden Ansprüche,
wobei die visuelle Unterstützung (213) als:
- eine Augmentation eines Bereichs eines Bedienfeldes (13) für eine Eingabe der Sicherheitsinformation (211) und/oder
- eine Augmentation einer Taste eines Nummernblocks für eine Eingabe der Sicherheitsinformation (211) und/oder
- eine Warnanzeige, welche auf eine getätigte Falscheingabe der Sicherheitsinformation (211) hinweist,
ausgebildet ist.

5. Verfahren nach einem der vorhergehenden Ansprüche,
mit dem weiteren Schritt:
- ein Aufnehmen (S6) einer Benutzerhandlung an oder relativ angeordnet zu der zu schützenden Vorrichtung (1).

6. Verfahren nach Anspruch 4 und Anspruch 5,
wobei die Ausgabe der visuellen Unterstützung (213) in Reaktion auf eine Auswertung der Benutzerhandlung erfolgt.

7. Verfahren nach einem der vorhergehenden Ansprüche,
mit dem weiteren (S21) Schritt:
- ein Senden einer Validierungsinformation (211) vor dem Empfangen der Sicherheitsinformation (S3).

8. Verfahren nach Anspruch 7,
wobei die Validierungsinformation ausgebildet ist als:
- eine Vorrichtungsauthentisierungsinformation und/oder
- eine Positionsinformation und/oder
- eine Nutzerauthentisierungsinformation und/oder
- eine Anwendungsinformation eines Benutzergeräts.

9. Augmented Reality Gerät (2) ausgebildet ein Verfahren nach einem der vorherigen Ansprüche auszuführen.

10. Augmented Reality Gerät (2) nach Anspruch 9,
ausgebildet als:
- AR-Brille und/oder
- tragbares Mobilgerät, insbesondere ein Smartphone, eine Smartwatch oder ein Tablet.

11. Verfahren zum Senden einer Sicherheitsinformation (211), wobei die Sicherheitsinformation (211) zum Freischalten einer Sperre ausgebildet ist, wobei die Sperre als Zugriffsschutz auf eine zu schützende Vorrichtung (1) ausgebildet ist,
mit den Schritten:
- Ein Empfangen einer Vorrichtungsidentifizierungsinformation, wobei die Vorrichtungsidentifizierungsinformation als eine visuelle Aufnahme einer Vorrichtungsidentifizierung (12) der zu schützende Vorrichtung (1) ausgebildet ist,
- Ein Prüfen der Vorrichtungsidentifizierungsinformation,
- Ein Senden der Sicherheitsinformation (211) in Abhängigkeit eines Ergebnisses des Prüfens der Vorrichtungsidentifizierungsinformation, wobei die Sicherheitsinformation (211) der Vorrichtungsidentifizierungsinformation zugeordnet ist, und
- Ein Senden eines weiteren Datensatzes umfassend eine zusätzliche visuelle Unterstützung (213) für eine Verwendung der Sicherheitsinformation (211) für den Zugriff auf die zu schützende Vorrichtung (1), wobei die visuelle Unterstützung (213) ausgebildet ist, zusätzlich zu der Sicherheitsinformation (211) ausgegeben zu werden.

12. Verfahren nach Anspruch 11,
mit den weiteren Schritten:
- Ein Senden eines Datensatzes umfassend eine visuelle Anzeige (21), wobei die visuelle Anzeige (21) zumindest einen Ausschnitt einer Abbildung (212) der zu schützenden Vorrichtung (1) und die Anzeige der Sicherheitsinformation (211) umfasst und/oder
- Ein Auswerten einer Benutzerhandlung an oder relativ angeordnet zu der zu schützenden Vorrichtung (1)
und/oder
- Ein Empfangen einer Validierungsinformation vor dem Senden der Sicherheitsinformation (211) und/oder
- Ein Prüfen der Validierungsinformation, wobei das Senden der Sicherheitsinformation (211) außerdem in Abhängigkeit eines Ergebnisses des Prüfens der Validierungsinformation erfolgt.

13. AR-Hintergrundsystem ausgebildet ein Verfahren nach einem der Ansprüche 11 bis 12 auszuführen.

## Claims

1. Method for outputting a display of security information (211), wherein the security information (211) is designed to release a lock which is designed to protect access to a device (1) to be protected,
the method having the steps of:
- visually capturing (S1) a device identification (12) of the device (1) to be protected, whereby device identification information is generated,
- transmitting (S2) the device identification information,
- receiving (S3) the security information (211), said security information (211) being assigned to the device identification information (12),
- outputting (S4) a visual display (21), said visual display (21) comprising at least one extract of an image (212) of the device (1) to be protected and the display of the security information (211), and
- additionally outputting (S5) a visual aid (213) for using the security information (211) in order to release the lock.

2. Method according to Claim 1,
wherein the security information (211) is implemented as:
- a device code and/or
- a PIN code and/or
- a release code and/or
- a password and/or
- a numerical code and/or
- an alphanumeric code.

3. Method according to either of the preceding claims, wherein the visual display (21) is designed as an augmented reality display.

4. Method according to any one of the preceding claims, wherein the visual aid (213) is implemented as:
- an augmentation of an area of a control panel (13) for entering the security information (211) and/or
- an augmentation of a key of a number pad for entering the security information (211) and/or
- a warning indication indicating an incorrect entry of the security information (211).

5. Method according to any one of the preceding claims,
having the additional step of:
- capturing (S6) a user action arranged on or relative to the device (1) to be protected.

6. Method according to Claim 4 and Claim 5,
wherein the visual aid (213) is output in response to an evaluation of the user action.

7. Method according to any one of the preceding claims,
having the additional (S21) step of:
- transmitting validation information (211) before receiving the security information (S3).

8. Method according to Claim 7,
wherein the validation information is implemented as:
- device authentication information and/or
- position information and/or
- user authentication information and/or
- application information of a user device.

9. Augmented reality device (2) designed to carry out a method according to any one of the preceding claims.

10. Augmented reality device (2) according to Claim 9,
designed as:
- AR glasses and/or
- a portable mobile device, in particular a smartphone, smartwatch or tablet.

11. Method for transmitting security information (211), wherein the security information (211) is designed to release a lock which is designed to protect access to a device (1) to be protected,
the method having the steps of:
- receiving device identification information, wherein the device identification information is formed as a visual recording of a device identification (12) of the device (1) to be protected,
- checking the device identification information,
- transmitting the security information (211) depending on a result of checking the device identification information, the security information (211) being assigned to the device identification information, and
- transmitting a further data record comprising an additional visual aid (213) for using the security information (211) for access to the device (1) to be protected, wherein the visual aid (213) is designed to be output in addition to the security information (211).

12. Method according to Claim 11,
having the additional steps of:
- transmitting a data record comprising a visual display (21), said visual display (21) comprising at least one extract of an image (212) of the device (1) to be protected and the display of the security information (211) and/or
- evaluating a user action arranged on or relative to the device (1) to be protected and/or
- receiving validation information before transmitting the security information (211) and/or
- checking the validation information, wherein the transmission of the security information (211) also takes place depending on a result of the validation information checking.

13. AR background system designed to carry out a method according to either of Claims 11 to 12.

## Revendications

1. Procédé de fourniture d'un affichage d'une information de sécurité (211), dans lequel l'information de sécurité (211) est conçue pour déverrouiller une serrure, dans lequel la serrure est conçue comme une protection d'accès à un dispositif à protéger (1), comprenant les étapes consistant à :
- procéder à un enregistrement visuel (S1) d'une identification de dispositif (12) du dispositif à protéger (1), ce qui crée une information d'identification de dispositif,
- envoyer (S2) l'information d'identification de dispositif,
- recevoir (S3) l'information de sécurité (211), dans lequel l'information de sécurité (211) est associée à l'information d'identification de dispositif (12),
- fournir (S4) un affichage visuel (21), dans lequel l'affichage visuel (21) comprend au moins une partie d'une image (212) du dispositif à protéger (1) et l'affichage de l'information de sécurité (211), et
- fournir de manière supplémentaire (S5) un support visuel (213) en vue d'une utilisation de l'information de sécurité (211) pour le déverrouillage de la serrure.

2. Procédé selon la revendication 1, dans lequel l'information de sécurité (211) est conçue pour être :
- un code d'appareil et/ou
- un code PIN et/ou
- un code de déverrouillage et/ou
- un mot de passe et/ou
- un code numérique et/ou
- un code alphanumérique.

3. Procédé selon l'une quelconque des revendications précédentes, dans lequel l'affichage visuel (21) est conçu pour être un affichage en réalité augmentée.

4. Procédé selon l'une quelconque des revendications précédentes, dans lequel le support visuel (213) est conçu pour être :
- un agrandissement d'une région d'un panneau de commande (13) en vue d'une saisie de l'information de sécurité (211) et/ou
- un agrandissement d'une touche d'un pavé numérique en vue d'une saisie de l'information de sécurité (211) et/ou
- un affichage d'avertissement indiquant une saisie incorrecte de l'information de sécurité (211).

5. Procédé selon l'une quelconque des revendications précédentes, comprenant l'étape supplémentaire consistant à :
- enregistrer (S6) une action d'utilisateur sur le, ou agencé par rapport au, dispositif à protéger (1).

6. Procédé selon la revendication 4 et la revendication 5, dans lequel la fourniture du support visuel (213) intervient en réponse à une évaluation de l'action d'utilisateur.

7. Procédé selon l'une quelconque des revendications précédentes, comprenant l'étape supplémentaire (S21) consistant à :
- envoyer une information de validation (211) avant la réception de l'information de sécurité (S3).

8. Procédé selon la revendication 7, dans lequel l'information de validation est conçue pour être :
- une information d'authentification de dispositif et/ou
- une information de position et/ou
- une information d'authentification d'utilisateur et/ou
- une information d'application d'un appareil utilisateur.

9. Appareil de réalité augmentée (2) conçu pour mettre en œuvre un procédé selon l'une quelconque des revendications précédentes.

10. Appareil de réalité augmentée (2) selon la revendication 9, conçu sous la forme de :
- lunettes de réalité augmentée et/ou
- un appareil mobile portable, en particulier un smartphone, une montre connectée ou une tablette.

11. Procédé de fourniture d'un affichage d'une information de sécurité (211), dans lequel l'information de sécurité (211) est conçue pour déverrouiller une serrure, dans lequel la serrure est conçue comme une protection d'accès à un dispositif à protéger (1), comprenant les étapes consistant à :
- recevoir une information d'identification de dispositif, dans lequel l'information d'identification de dispositif est conçue comme un enregistrement visuel d'une identification de dispositif (12) du dispositif à protéger (1),
- vérifier l'information d'identification de dispositif,
- envoyer l'information de sécurité (211) en fonction d'un résultat de la vérification de l'information d'identification de dispositif, dans lequel l'information de sécurité (211) est associée à l'information d'identification de dispositif, et
- envoyer un autre ensemble de données comprenant un support visuel (213) supplémentaire en vue d'une utilisation de l'information de sécurité (211) pour l'accès au dispositif à protéger (1), dans lequel le support visuel (213) est conçu pour être fourni en plus de l'information de sécurité (211).

12. Procédé selon la revendication 11, comprenant l'étape supplémentaire consistant à :
- envoyer un ensemble de données comprenant un affichage visuel (21), dans lequel l'affichage visuel (21) comprend au moins une partie d'une image (212) du dispositif à protéger (1) et l'affichage de l'information de sécurité (211) et/ou
- évaluer une action d'utilisateur sur le, ou agencé par rapport au, dispositif à protéger (1) et/ou
- recevoir une information de validation avant l'envoi de l'information de sécurité (211) et/ou
- vérifier l'information de validation, dans lequel l'envoi de l'information de sécurité (211) intervient en outre en fonction d'un résultat de la vérification de l'information de validation.

13. Système d'arrière-plan à réalité augmentée conçu pour un procédé selon l'une quelconque des revendications 11 à 12.
